(19) Europäisches Patentamt
European Patent Office
Office européen des brevets

(11) EP 3 222 846 A1

(12) EUROPEAN PATENT APPLICATION

(43) Date of publication:
27.09.2017 Bulletin 2017/39

(51) Int Cl.:
F03D 1/06 (2006.01)

(21) Application number: 16162225.3

(22) Date of filing: 24.03.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Winfoor AB
227 64 Lund (SE)

(72) Inventors:
• BERTHILSSON, Rikard
SE-244 60 FURULUND (SE)
• WEDDIG, Björn
SE-226 46 LUND (SE)
• HOLMBERG PERSSON, Kent
SE-235 37 VELLINGE (SE)

(74) Representative: Awapatent AB
P.O. Box 5117
200 71 Malmö (SE)

(54) WIND TURBINE ROTOR BLADE

(57) A wind turbine rotor blade (5) is provided. The blade (5) comprises: a three-dimensional truss-like frame extending in a longitudinal direction of the rotor blade (5). The frame comprises a plurality of longitudinal frame members (9, 11, 13), an inner (27) and an outer (29) support, each being connected to the plurality of longitudinal frame members (9, 11, 13), a plurality of diagonal frame members (15, 17, 19, 21, 23, 25), extending between the inner (27) and the outer (29) support, wherein at least one (15, 17, 19, 21, 23, 25) of the diagonal frame members (15, 17, 19, 21, 23, 25) at one end is connected to the inner support (27) and at an opposite end is connected to the outer support (29), wherein said at least one diagonal frame member (15, 17, 19, 21, 23, 25) is pre-tensioned between the inner (27) and the outer (29) support by being subject to an internal force in the frame.

Fig. 1

EP 3 222 846 A1

## Description

Technical Field

The present invention relates to a wind turbine rotor blade.

Background of the Invention

There is a growing interest in renewable energy technologies throughout the world. For instance, climate change concerns are driving energy production to renewable energy technologies. Wind power is therefore an important energy source and the amount of power produced annually through wind power is growing rapidly.

Wind power is the conversion of wind energy into more useful forms, such as electricity. In this regard, use is made of a wind turbine, which is a device that converts kinetic energy from the wind into electrical power. A wind turbine comprises a rotor having a central hub, to which one or more blades are attached. The rotor is arranged to rotate as the blades are subject to a mass of air passing the wind turbine due to a blowing wind. The rotation of the rotor thus generates mechanical energy that may be converted to electrical power in the wind turbine.

There are two main types of wind turbines, horizontal-axis wind turbines (HAWT), wherein the blades rotate about a horizontal axis, and vertical-axis wind turbines (VAWT), wherein the blades rotate about a vertical axis. The far most common type of wind turbine for large-scale power production is the HAWT and the discussion below is mainly directed to HAWTs.

The blades are formed with an airfoil-shaped cross-section. This implies that the blades are formed such that the surface at the leading side in the rotational direction of the blade causes the air passing the surface to take a longer path than the air passing the surface at the trailing side. Hence, the air passing over the surface at the leading side will travel faster than the air passing over the surface at the trailing side. Therefore, a difference in pressure is formed, resulting in a lift force on the blade. This lift force induces a torque about a rotor axis which causes the rotor to rotate.

The relative flow velocity, including speed and direction, between a moving blade and the air is called the apparent flow velocity. As air passes the surface of an airfoil shaped blade it exerts a force on it that depends on the apparent flow velocity and the shape of the airfoil. Lift force is the component of the force that is perpendicular to the oncoming apparent flow direction. It contrasts with the drag force, which is the component of the force parallel to the apparent flow direction. Contrary to the lift force, the drag force tends to counteract the movement of the blade and it can be shown through mathematical analysis that in order to optimize the power efficiency of the turbine the blade should be designed so as to maximize the ratio between the lift force and the drag force.

The power production capacity of a wind turbine is mainly affected by the length of the blades. The power generated by a wind turbine is proportional to the area swept by the blades, which is proportional to the square of the length of the blades. Hence, an increased length of the blades enables an increased power production of the wind turbine.

However, the blades also need to be designed with the loads encountered by the blades during operation of the wind turbine in mind. Aerodynamic loads are formed by means of rotation of the blade in the air. The aerodynamic loads cause a bending moment on the blade, which is largest closest to the hub. While the aerodynamic loads may vary due to wind turbulence, the aerodynamic loads exerted on the blades are proportional to the square of the length of the blades.

The blades are also exerted to gravity loads due to the mass of the blade, and as the blade rotates a full circle the blade will go through a fatigue cycle. The gravity loads are proportional to the cube of the length of the blade. Therefore, although the aerodynamic loads are dominating for small-size blades, the gravity loads will become dominating as the length of the blades increases.

Thus, as the length of the blades is increased in order to increase the power production capacity of wind turbines, the blades need to be designed with a close attention to gravity loads exerted on the blades. Otherwise, there is a risk of fatigue failure due to the large mass of the blade. Furthermore, long blade will lead to problems concerning deformations, cracks and torsions of the blades. Hence, design of the blade becomes difficult as the length of the blade increases.

The mass of the blade and the associate gravity loads, as well as the aerodynamic loads, may force the design of the shape of the blade to be a compromise between strength and aerodynamics. In particular close to the hub, the blade may need to have a design which is optimized for providing strength rather than airfoil characteristics, which implies that the aerodynamic properties of the blade will not be optimal.

Further, when the wind turbine is to be installed, the wind turbine parts need to be transported to the site of the wind turbine. The wind turbine consists of very large parts, such as the long blades, which makes transportation of the parts to the site a difficult task. For instance, the wind turbine parts may be much longer than the usually allowed length of vehicles, which implies that special vehicles need to be used for transportation of the parts on land. Further, the mass of the wind turbine parts may also set special requirements in order to allow transportation of the parts to the site. Also, installation of the parts on the site is cumbersome due to the mass and length of the parts.

Also, the cost of the blade of course increases with the mass of the blade. Since the mass of the blade is proportional to the cube of the length of the blade, the costs of manufacturing a blade increases more rapidly with the length of the blade than the power production capacity of the wind turbine.

Finally, a large mass of the blade may cause problems with tower and foundation of the wind turbine, as large loads are exerted on these parts of the wind turbine by the mass of the blade. Also, the increased mass of the blade causes increased loads on the rotor hub by means of the increased rotational inertia.

It is clear from the above that any modification of blades of wind turbines, such that the mass of the blades is decreased would significantly improve problems faced in design of the blades.

In US 7,517,198, a lightweight wind turbine blade is disclosed. The turbine blade comprises a lightweight composite support truss structure. The support truss structure is covered by an assembly of skins forming the basic airfoil shape of the blade. A series of laterally spaced ribs form a spine of the blade and define the general airfoil shape. However, the blade needs to be thin in order to keep the aerodynamic loads down. This implies that it is difficult to obtain a strong structure. Therefore, the ribs closest to the hub have a circular shape providing strength to the structure rather than good aerodynamic properties.

In EP 1 887 219, a special blade structure is disclosed. The blade structure makes use of the fact that the moment of inertia of a blade can be increased by designing a profile section of the blade so as to increase the surface of the section and the distance of the section to a neutral line. Further, the stress that a material of a section in the structure supports is inversely dependent to the moment of inertia, whereby increasing the moment of inertia decreases the stress of the material. Hence, by means of dividing the blade into sub-blades and separating the sub-blades, the moment of inertia may be increased without increasing the weight of the material. However, to achieve the greater moment of inertia, the sub-blades need to be firmly joined. Therefore, links are spaced out along the length of the sub-blades. Although this structure allows the stress that a material of a section in the structure supports to be decreased, the weight of the blade is in principle not decreased. Hence, there may still be a need to decrease the weight of blades. Also, the sub-blades are exerted to bending moments, which implies that the sub-blades closest to the hub needs to be designed with regard to providing strength to the sub-blade rather than aerodynamic properties.

US 1,820,529 discloses a propeller blade provided with a plurality of aero-foils, that merge at an apex. Each aero-foil slopes outward towards a supporting end where it is rigidly fixed to a common blade axis. A plurality of shelves are positioned to be clamped between the plurality of aerofoils, substantially parallel to the blade axis. Also, an oblique tie structure is rigidly secured to cross-brace one aerofoil with respect to the others of a given blade along the length thereof.

Summary of the Invention

It is an object of the invention to provide a design of a wind turbine rotor blade such that a stable light weight blade is accomplished.

These and other objects of the invention are at least partly met by the invention as defined in the independent claims. Preferred embodiments are set out in the dependent claims.

According to an aspect of the invention, there is provided a wind turbine rotor blade, comprising a three-dimensional truss-like frame extending in a longitudinal direction of the rotor blade; the frame comprising: a plurality of longitudinal frame members, an inner and an outer support, each being connected to the plurality of longitudinal frame members, a plurality of diagonal frame members, extending between the inner and the outer support, wherein at least one of the diagonal frame members at one end is connected to the inner support and at an opposite end is connected to the outer support, wherein said at least one diagonal frame member is pre-tensioned between the inner and the outer support by being subject to an internal force in the frame.

As used herein, a "truss-like frame" should be construed as a three-dimensional framework of members. The framework thus constitutes a three-dimensional structure that forms the overall shape of the blade. A truss is a structure that is formed by straight members that are connected at joints to form units of triangles. The members should furthermore be free to rotate around the joints. In a truss, moments (torques) cannot be transferred within the truss and the members are therefore subjected to only axial forces (tensile and compressive forces). Within the context of this application, the "truss-like frame" should be construed as a structure comprising triangles for forming a strong structure, but not necessarily having joints that cannot transfer any moments. For instance, at least three members may be connected at a joint, but not all members need to be connected at exactly a single point. Rather, one or two of the members may be connected close to the joint, but not in an exact single position connecting all members at the joint. Further, in a three-dimensional truss, the triangles of the truss do not all lie in a single two-dimensional plane. Hence, the "the truss-like three-dimensional frame" should be construed as a "truss-like frame" comprising triangles that do not all lie in a single two-dimensional plane. In some cases, the "truss-like frame" may be formed from tetrahedron units.

It is an insight of the invention that a wind turbine rotor blade may be formed by a truss-like frame. Thanks to the truss-like frame, the truss members will generally only be exerted to tensile or compressive forces. However, as truss members of such a truss-like frame may be long and slender, the members that are being compressed are very likely to buckle when a wind load is applied to the structure. The pre-tensioning of a diagonal truss member enables to secure that the pre-tensioned truss member is in tension when the frame is subjected to a wind load. This has the advantage that buckling of individual truss members may be avoided. By pre-tensioning one or several diagonal truss members of the frame a very stable structure may thus be achieved. When the pre-tensioned frame is subjected to a wind load, the tension force is increased in some truss members and decreased in some. The diagonal truss members may be pre-tensioned with a force high enough to accomplish no compression forces in any truss member after wind loads has been applied. The added tension forces counteract compression of truss members caused by wind loads applied to a rotor blade in operation. Hence, thanks to the diagonal frame member(s) being pre-tensioned, buckling and excessive vibrations of one or more individual truss member(s) may be avoided. This has the advantage that fatigue damages may be reduced significantly, which extends the life span of the rotor blade.

Hence, the truss-like frame may form a strong and stable structure although individual frame members of the truss-like structure may be relatively thin and light weight. Therefore, by means of the invention, it is possible to form a wind turbine rotor blade that is considerably lighter and stronger than a blade having a unitary shape.

The truss-like frame implies that the shape of the blade is not entirely optimized from an aerodynamic point of view. Since the structure comprises a plurality of members, air passing over the plurality of members will contribute to increasing the drag force on the blade. However, a lift-to-drag ratio of the blade may still be relatively good and not differ substantially from a blade having a unitary shape. Therefore, while the efficiency of the blade may not be as good as an equally long blade having a unitary shape, the light weight of the truss-like structure may allow construction of a wind turbine of much larger dimensions so as to provide a large power production capacity of the wind turbine. Also, the light truss-like structure allows a relatively small amount of material to be used in the manufacture of the wind turbine, wherein not only the blades but also a tower and foundation of the wind turbine may need less material due to the lower weight of the blades. Hence, the material cost of the wind turbine will be decreased.

It may be particularly advantageous to use a blade comprising a truss-like structure in an off-shore wind turbine, since transportation of parts of the wind turbine to an off-shore site may be relatively easy using ships. Thus, the size of off-shore wind turbines may be increased thanks to the use of lightweight blades. However, blades comprising a truss-like structure may also advantageously be used in land based wind turbines, wherein the light weight of the blades may facilitate transport and also allow installing wind turbines at sites that are difficult to access.

The truss-like frame of the blade may provide a relatively small deflection of a tip of the blade thanks to a large flexural rigidity of the blade. In strong winds, the deflection of the tip may become so large that the blade may hit the tower when rotating. Hence, by providing a blade with large flexural rigidity, the wind turbine may be able to operate in strong winds, increasing the percentage of time that the wind turbine is operational and hence increasing the overall efficiency of the wind turbine.

The blade comprising a truss-like structure may be arranged to be compatible with existing HAWT designs and specifically to fit to the hub of existing HAWTs. This implies that the blade may be used with existing HAWTs and that it may not be necessary to install completely new wind turbines in order to make use of the blades according to the invention.

Further, it should be realized that a blade according to the invention may also be used with a VAWT, providing the blade of a VAWT with a truss-like frame in order to provide a light weight blade to a VAWT.

The blade may be delivered in parts to a site where a wind turbine is to be installed. For instance, the blade may be delivered as separate individual members of the truss-like frame. Alternatively, the blade may be delivered as sections of assembled members of the truss-like structure. It should be realized that the blade may be partitioned in a number of different ways for the transport in order to suit the transportation method and the amount of installation work that may be appropriate at the site.

Further, a blade according to the invention need not be based entirely on a uniform truss-like frame. For instance, the gravity loads on the tip of the blade are not as large as closer to the hub. This implies that the truss-like frame may not need to be designed at the tip of the blade to withstand as large loads. Therefore, the truss-like frame at the tip of the blade may comprise fewer members than the truss-like frame closer to the hub. It should be realized that the truss-like frame may be varied between different parts of the blade for other reasons as well. In fact, at the tip of the blade no diagonal frame members may be needed.

Moreover, the blade need not even be formed entirely as a truss-like frame. Portions of the blade may be formed e.g. as a unitary frame. For instance, the tip of the blade, which is exerted to smaller gravity loads, may be formed from a unitary structure having an airfoil-shaped cross-section for providing a lift force on the blade. Alternatively or additionally, a portion of the blade closest to the hub may be formed from a unitary structure for facilitating connection of the blade to the hub.

According to one embodiment said frame comprises a pre-tensioning device, such as a pre-tensioning rod arrangement, arranged to pre-tension said at least one diagonal member to a predetermined pre-tension force.

According to one embodiment said diagonal frame member has a constant cross section, which may facilitate manufacture of the diagonal frame member.

According to one embodiment at least a portion of said diagonal frame member has a tapering cross section, as seen in a direction from said end at which the diagonal frame member is connected to the inner support to said end at which the diagonal frame member is connected to the outer support. This may act to prevent flutter or vibrations to arise in the diagonal frame member when the blade is subject to a blowing wind, which may further improve the stability of the frame.

According to one embodiment said at least one diagonal frame member is pre-tensioned to such extent that the elongation of the diagonal frame member exceeds 2.5 ‰.

According to one embodiment, said at least one diagonal frame member is pre-tensioned to such extent that the elongation of the diagonal frame member may be given by:

$$\varepsilon = \sigma/4/E,$$

wherein $\varepsilon$ is the elongation, $\sigma$ is the ultimate tensile strength and E is Young's modulus for the material of the diagonal frame member. For carbon fiber, this would correspond to an elongation of 3 ‰, whereas for glass fiber, this would correspond to an elongation of 6 ‰.

Preferably, a diagonal frame member that is subjected to a significant bending moment caused by aerodynamical loads when the blade is subject to a blowing wind is pre-tensioned.

According to one embodiment said diagonal frame member is a rod, which makes the frame robust and stable.

According to one embodiment said longitudinal frame members have an airfoil-shaped cross-section.

According to an embodiment, there is provided three longitudinal frame members having an airfoil-shaped cross-section that is adapted to generate a desired lift force when subject to a blowing wind. Hence, the cross-sectional dimensions of the longitudinal frame members are relatively large. The longitudinal frame members may in such case form sub-blades that are mainly responsible for driving the rotation of the blade when it is subject to a blowing wind.

According to one embodiment said at least one diagonal frame member has an airfoil-shaped cross-section.

A frame member, such as a longitudinal member or a diagonal member, having an airfoil-shaped cross-section implies that a member that is part of the truss-like frame is shaped so as to cause a lift force on the blade as a wind passes the blade. Hence, the truss-like frame not only provides a light and stable structure of the blade but also provides the blade with characteristics for causing the blade to rotate as the blade is exerted to a blowing wind.

The frame members having an airfoil-shaped cross-section are supported by the truss-like frame. Hence, the design of the frame members need not be particularly constrained by requirements that the frame member is stiff enough to withstand the aerodynamic loads and gravity loads exerted on the blade. This implies that the shape of the frame members may be optimized to aerodynamic properties, even for parts of frame members closest to the hub of the rotor.

According to one embodiment the rotor blade comprises a plurality of rotor blade sections, as seen in the longitudinal direction, each section extending from an inner support to an outer support and having at least one pre-tensioned diagonal member between the inner support and the outer support, which further facilitates transport of a rotor blade since the parts of the blade may be transported separately or as sub-units.

The dimensions of the sections may be gradually decreasing so that a blade may be formed having a tip portion that has a smaller cross-section than a root portion closest to the hub. Hence, the inner support of the section may be larger than the outer support in order to provide a blade that is gradually narrowing towards the tip.

Also, the truss-like frame of the sections need not be identical for different sections. For instance, the truss-like frame of a section close to the tip may comprise fewer members than the truss-like frame of a section closer to the hub and/or a diagonal frame member of a section close to the tip may be pre-tensioned to a less extent than a diagonal frame member of a section closer to the hub, since the section close to the tip is exerted to a smaller bending moment.

A diagonal frame member, a longitudinal frame member and a support together form a triangular shape by means of how they are connected in the section. This implies that the section provides a truss-like structure and will therefore provide a strong and stable frame to the blade. A section may be provided with a plurality of diagonal frame members extending from a connection point between a longitudinal frame member and the inner support to a connection point between another longitudinal frame member and the outer support. The number of diagonal frame members may be varied in several ways so as to form different types of truss-like structures. The number of diagonal frame members associated with pairs of longitudinal frame members in the truss-like structure may also vary in the truss-like structure.

The diagonal frame members may be attached to the connectors at the connection points. Alternatively, the diagonal frame members may be attached to the longitudinal frame members at the connection points. As a further alternative, the diagonal frame members, longitudinal frame members and supports may be connected by pin joints at the connection points so as to form a true truss structure.

A diagonal frame member may be attached in the actual connection point between the longitudinal frame member and the support. However, it should be realized that the diagonal frame member may alternatively be attached to the connector or the longitudinal frame member in the vicinity of the connection point. Hence, the diagonal frame member, the longitudinal frame member and the support may form a shape which is close to triangular. This may be sufficient in order to form a truss-like structure providing a strong and stable structure to the blade.

According to one embodiment the said frame comprises at least two, more preferably at least four and most preferably at least six, pre-tensioned diagonal frame members.

Brief Description of Drawings

These and other aspects of the present invention will now be described in further detail, with reference to the appended drawings showing embodiment(s) of the invention.

Fig. 1 is a schematic view of a horizontal axis wind turbine provided with blades according to an embodiment of the invention.
Fig. 2 is an exploded perspective view and illustrates parts of a blade of the wind turbine shown in Fig. 1.
Figs. 3a-c are schematic perspective views the rotor blade section shown in Fig. 1 and illustrate pre-tensioning of diagonal frame members of the blade.
Fig. 4a is a side view of the wind turbine shown in Fig. 1 and illustrates rotor blades in an unloaded condition.
Fig. 4b is a side view of the wind turbine shown in Fig. 1 and illustrates rotor blades with pre-tensioned diagonal frame members in an unloaded condition.
Fig. 4c is a side view of the wind turbine shown in Fig. 1 and illustrates rotor blades with pre-tensioned diagonal frame members when subjected to a wind load.

Detailed Description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

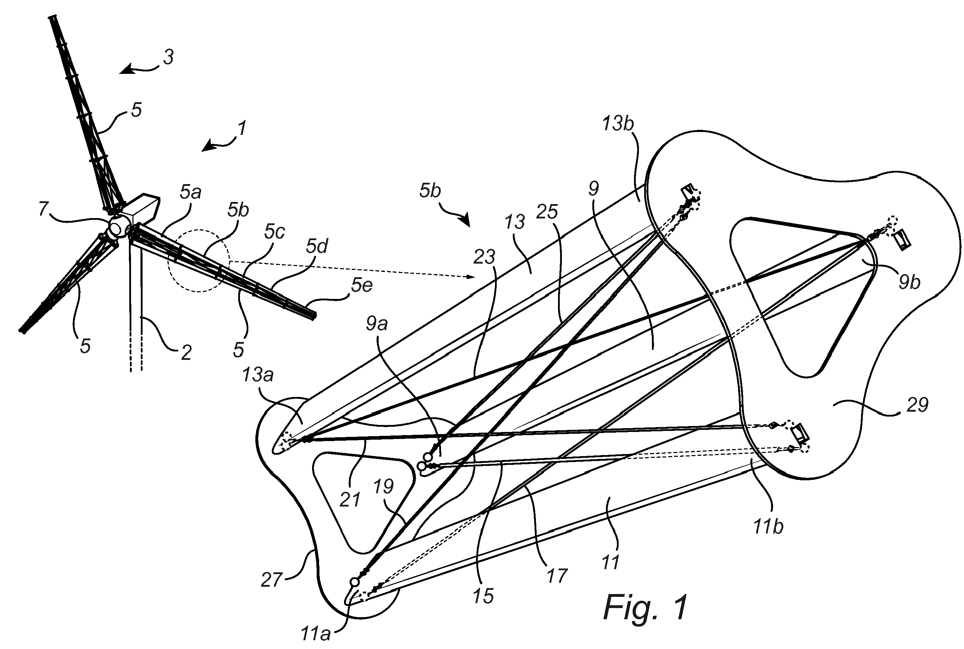

Referring now to Fig. 1, a horizontal-axis wind turbine 1 is shown. The wind turbine 1 comprises a tower 2 and a rotor 3. The rotor 3 has blades 5 according to an embodiment of the present invention and a central hub 7 to which the blades 5 are attached such that the blades 5 form cantilevered structures that are anchored only to the central hub 7. The rotor 3 captures energy of a mass of air that passes the rotor 3 due to a blowing wind. The energy is captured by means of the wind forcing the blades 5 to bring the rotor 3 to rotate. The rotor 3 is then connected in the wind turbine 1 to a generator (not shown) for converting the captured energy into electrical power.

The rotor 3 may comprise three blades 5 as shown in Fig. 1. However, the rotor 3 may alternatively be provided with another number of blades 5, such as one, two or even more than three blades 5.

The wind turbine 1 may be actively controlled so that the rotor 3 is turned to face the wind direction. This implies that the wind turbine 1 may be able to as efficiently as possible capture the energy in the blowing wind.

The blade 5 is shaped so that air passing the blade 5 will create a lift force on the blade 5 in the rotational direction of the blade 5. In this regard, the blade 5 comprises an airfoil-shape, which implies that the pressure will differ on different sides of the airfoil-shape generating the lift force. The blade 5 may be arranged so that the airfoil-shape is tilted in relation to the wind direction. The tilt angle is called an angle of attack. The angle of attack may affect the lift force of the blade 5 and at a critical angle of attack a maximum lift force is generated by the airfoil-shape.

The blade 5 comprises a three-dimensional truss-like frame having truss members that form a number of triangles. The truss-like frame implies that the individual members are principally only subject to tensile and compressive forces, which means that the members may be made thin while maintaining a strong overall structure. Each blade 5 may, for instance, comprise five sections 5a-e, of which one 5b is shown in the enlarged part of Fig. 1. The sections 5a-e, are arranged side by side as seen in the longitudinal direction of the blade 5.

Referring now to the enlarged part of Fig. 1, a section 5b of the blade 5 will be described. The rotor blade section 5b comprises three longitudinal members 9, 11, 13 extending in the longitudinal direction of the blade 5, six diagonal members 15, 17, 19, 21, 23, 25, an inner support, in the form of an inner connector plate 27, and an outer support, in the form of an outer connector plate 29.

The inner end 9a, 11 a, 13a of each longitudinal member 9, 11, 13 is located closest to the hub 7 of the wind turbine 1. The longitudinal members 9, 11, 13 have an airfoil-shaped cross-section so as to generate a lift force.

Each of the six diagonal truss members 15, 17, 19, 21, 23, 25 extends diagonally between the inner and outer connector plates 27, 29.

Also, each of the diagonal members 15, 17, 19, 21, 23, 25 extends diagonally between an inner end 9a, 11 a, 13a of one of the longitudinal members 9, 11, 13 and an outer end 9b, 11 b, 13b of another one of the three longitudinal members 9, 11, 13. For instance, the first diagonal member 15 thus extends between the inner end 9a of the first longitudinal member 9 and the outer end 11 b of the second longitudinal member 11, and the second diagonal member 17 extends between the inner end 11 a of the second longitudinal member 11 and the outer end 9b of the first longitudinal member 9. The first and the second diagonal members 15, 17 thereby form a first pair of diagonal truss members, the members of which are arranged crosswise between the first and second longitudinal members 9, 11. Further, the members 19, 21 of a second pair of diagonal members are crosswise arranged between the second and the third longitudinal members 11, 13, and the members 23, 25 of a third pair of diagonal members are crosswise arranged between the first and the third longitudinal members 9, 13.

This arrangement of the diagonal truss members 15, 17, 19, 21, 23, 25 may allow the diagonal frame members 15, 17, 19, 21, 23, 25 to be very thin and/or the connector plates 27, 29 to be arranged at a large distance from each other in the longitudinal direction of the blade 5.

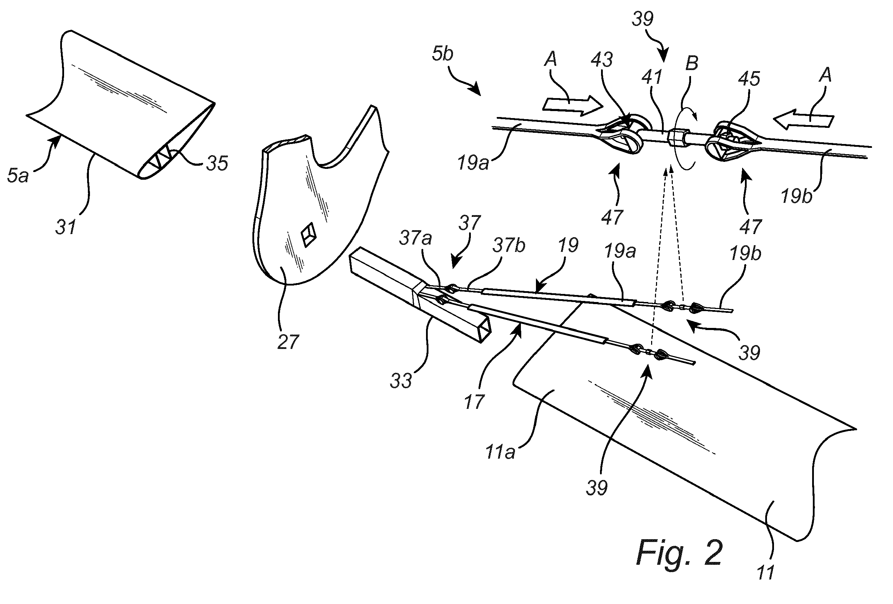

Now referring to Fig. 2, the rotor blade section 5b will be further described. Fig. 2 shows parts of the section 5b together with a longitudinal member 31 of an adjacent section 5a of the blade 5. The parts are shown in a partly exploded view to illustrate how members of the truss-like frame are connected to each other.

In this embodiment the longitudinal members 9, 11, 13 are attached to the connector plates 27, 29 by means of connector rods 33 extending through the connector plates 27, 29. To this end each longitudinal truss member 9, 11, 13 is provided with a connector tube 35 that mates with a connector rod 33. The inner end 11 a of the second longitudinal member 11 is thus connected to the inner connector plate 27 by means of an inner connector rod 33 and the outer end 11 b thereof is attached to the outer connector plate 29 by an outer connector rod (not shown).

The diagonal truss members are attached to the connector rod 33 by means of hinge joints 37. Each hinge joint 37 comprises a first hinge member 37a, which is secured to the connector rod 33, and a second hinge member 37b which is secured to an end of the diagonal frame member 15.

In this embodiment each diagonal truss member comprises two sub-members that are connected to each other by means of a pre-tensioning device in the form of a pre-tensioning rod arrangement 39. Hence, the diagonal truss member 19 comprises a first sub-member 19a and a second sub-member 19b which are connected to each other by a pre-tensioning device 39, as illustrated in the enlarged part of Fig. 2. Each of the first and second sub-members 19a, 19b is attached to a respective connector rod, of which one 33 is shown in Fig. 2, by a hinge joint 37, as described hereinbefore.

The pre-tensioning rod arrangement 39 comprises a pre-tensioning rod 41, one end of which is provided with a left-hand thread and the other end of which is provided with a right-hand thread, and two nuts 43, 45, each of which is connected to a respective sub-member 19a, 19b. The pre-tensioning rod 41 is connected to each of the sub-members 19a, 19b of the frame member 19 by means of hinge joints 47. The tension in the diagonal frame member 19 can be adjusted by rotating the rod 41, which causes the nuts 43, 45 to be screwed towards each other or away from each other simultaneously, without twisting the interconnected sub-members 19a, 19b. When the pre-tensioning device 39 is tightened, the frame member 19 is thus pre-tensioned by being subject to an internal force in the frame. A portion of the rod 41 has a shape that facilitates rotation of the rod 41 using a tool. Hence, the diagonal frame member may be pre-tensioned, as illustrated by arrows A in Fig. 2, by rotating the rod 41, as illustrated by arrow B.

Preferably, a mid portion of the rod has a hexagonal shape, as illustrated in Fig. 2, to facilitate rotation of the rod 41.

The members of the section are attached to each other in such manner as to form triangles, which are defined by a longitudinal frame member, a diagonal frame member and a connector plate.

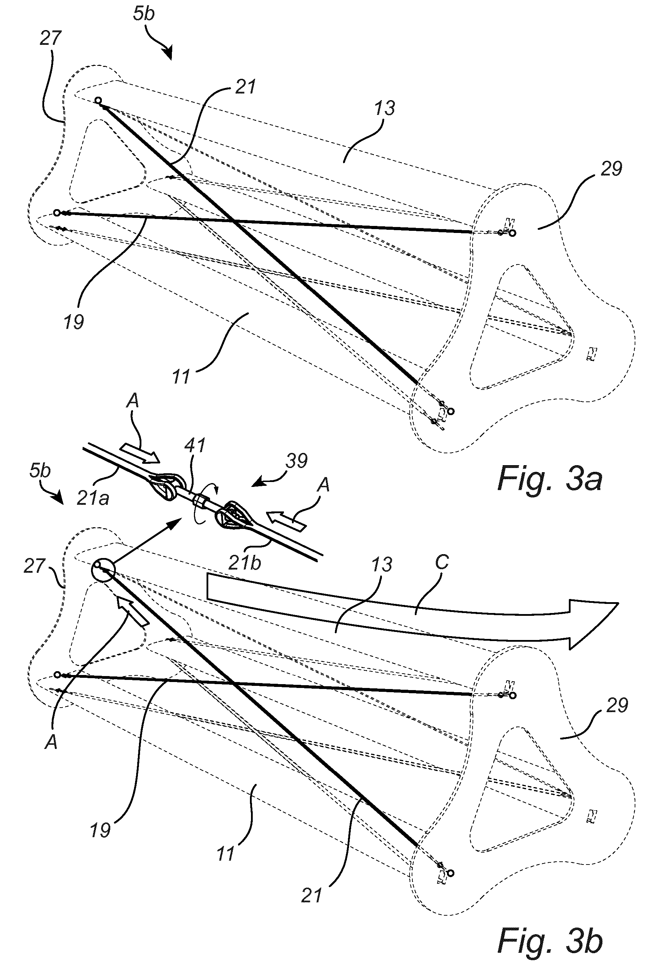

Now referring to Figs. 3a-c, pre-tensioning of the second pair of diagonal members 19, 21 of the section 5b will be described.

In a first step, the second diagonal member 21 of the second pair of of diagonal members is pre-tensioned by rotating the rod 41 of the pre-tensioning device 39, as illustrated in the enlarged part of Fig. 3b. In this first pre-tensioning operation the second diagonal member 21 is subjected to a predetermined pre-tensioning force F1, which causes the section 5b to deform slightly, as schematically illustrated by arrow C in Fig. 3b.

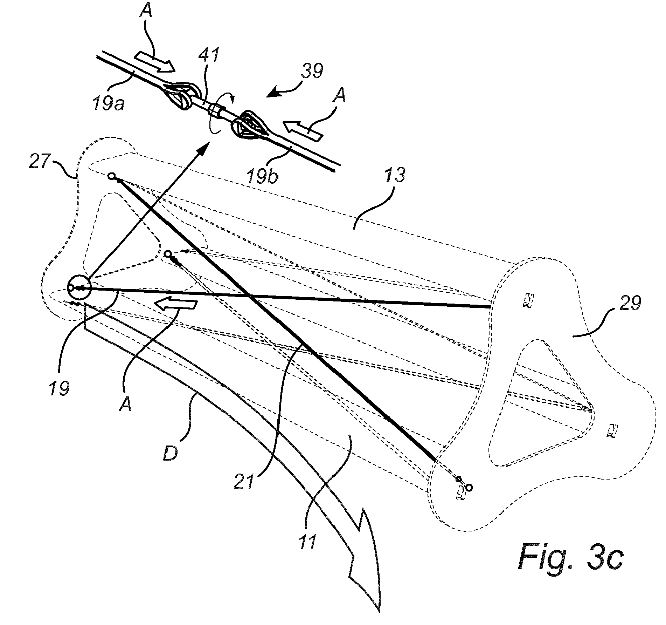

In a subsequent step, the first diagonal member 19 of the second pair of diagonal members is pre-tensioned by rotating the rod 41 of the pre-tensioning device 39, as illustrated in the enlarged part of Fig. 3c. The first diagonal member 19 of the second pair diagonal members is pre-tensioned to a larger extent than the second diagonal member 21 of the pair. Hence, in the second pre-tensioning operation the first diagonal member 19 is subjected to a predetermined pre-tensioning force F2 being larger than F1, which causes the section 5b to deform in an opposite direction, as schematically illustrated by arrow D in Fig. 3b.

In this way the diagonal members 19, 21, which are subjected to a significant bending moment caused by aerodynamical loads when the blade 5 is subject to a blowing wind, can be pre-tensioned to such an extent that they always are subjected to tensile forces when the wind turbine 1 is in operation. Each diagonal frame member is thus preferably pre-tensioned to avoid being subjected to compressive forces, which improves the stability of the frame significantly.

It should be realized that the size and shape of the cross-section of the diagonal truss members 5, as well as the angle of attack, may be varied in order to find an optimum design with regard to strength of the structure, the effect on the lift-to-drag ratio of the blade 5 and the avoidance of vibrations in the diagonal frame members 15, 17, 19, 21, 23, 25.

Also, it should be realized that the pre-tensioning of the diagonal truss members may be varied to find an optimum pre-tensioning with regards to different load scenarios.

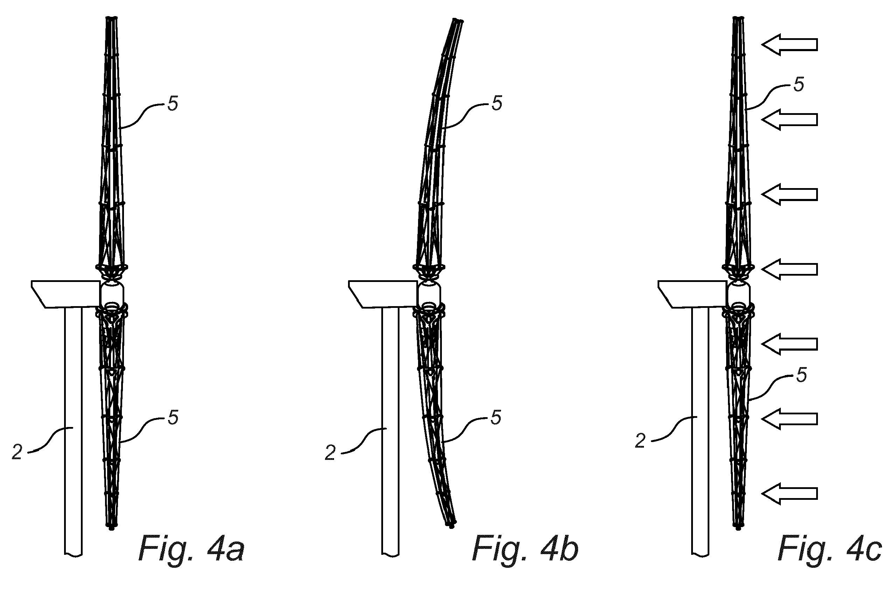

Now referring to Figs. 4a-c, the function of pre-tensioning of diagonal members of a rotor blade will be described.

Fig. 4a illustrates two blades 5 prior to pre-tensioning of diagonal members in an unloaded condition. In the unloaded condition the blades are not subjected to a wind load. In this condition the blades 5 extend in a direction that is parallel to the tower 2.

Fig. 4b illustrates the blade after pre-tensioning of diagonal members still in an unloaded condition. All pair of diagonal members has been pre-tensioned in the same manner as described for the first pair of diagonal member 15, 17 hereinbefore with reference to Figs. 3a-c. As illustrated in Fig. 3b the blades 5 are bent away from the tower 2.

Fig. 4c shows the pre-tensioned blades being subject to a wind load, illustrated by arrows. As illustrated in Fig. 4c the wind load causes the blades 5 to deform to a shape corresponding to the shape of the blades in the unloaded condition shown in Fig. 4a. During operation all of the diagonal truss members are subjected to tensile forces.

Furthermore, the truss-like frame of the blade 5 need not be identical throughout the entire length of the blade 5. Rather, a configuration of the truss-like frame may vary between different sections of the blade 5.

The connector plate 27 may be a relatively thin structure, which is arranged to extend in a cross-section of the blade 5. The thin structure of the connector plate 27 may thus ensure that the connector plate 27 has a small surface facing the wind direction in order to limit a drag force on the blade 5 caused by the connector plate 27. The connector plate 27 may further have a streamlined shape with the surface facing the wind direction being rounded so that the drag force on the blade 5 is further limited.

The connector plate 27 will be subject to compressive forces in the truss-like structure. Hence, the structure of the connector plate 27 needs to be sufficiently thick and strong to withstand bending from the compressive forces.

The person skilled in the art realizes that the present invention by no means is limited to the preferred embodiments described above. On the contrary, many modifications and variations are possible within the scope of the appended claims.

For example, a blade having a truss-like structure may be used in a vertical axis wind turbine (VAWT). Then, an outer shape of the truss-like structure of the blade may mimic the shape of presently used VAWT blades. This implies that the blade may be used to replace blades in already existing VAWT plants.

Also, the blade need not necessarily be formed in its entirety by a truss-like structure. Rather, one or more portions of the blade may be formed by another structure, such as a unitary structure having an outer airfoil-shaped cross-section. For instance, a tip portion of the blade may be formed as a unitary structure having an outer shell, which provides an airfoil-shape. Hence, the blade may comprise a truss-like structure which, at the tip of blade, is transferred into a unitary shape. Alternatively, the outermost section of the blade need not comprise any diagonal frame members.

Also, the arrangement of the diagonal frame members in the structure may be varied in a number of ways. The diagonal frame members may be arranged in accordance with a known truss structure.

The pre-tensioning device described with reference to Fig. 2 is one example of a pre-tensioning device that may be used to pre-tension a diagonal truss member. It is however realized that diagonal truss members may be pre-tensioned by means of a different type of pre-tensioning device.

As described hereinbefore a diagonal frame member may comprise two sub-members which are connected to each other by means of a pre-tensioning device. Alternatively, the diagonal member may comprise one single member that is at one end connected to a connector by means of a pre-tensioning device, e.g. in the form of a pre-tensioning screw.

As described hereinbefore, the diagonal frame members may be anchored at connection points by means of hinge joints. Alternatively, the diagonal truss members may be attached to the connectors, e.g. by bolts or welding of the diagonal frame members to the connection points.

## Claims

1. A wind turbine rotor blade (5), comprising:

   a three-dimensional truss-like frame extending in a longitudinal direction of the rotor blade (5);

   the frame comprising:

   a plurality of longitudinal frame members (9, 11, 13),
   an inner (27) and an outer (29) support, each being connected to the plurality of longitudinal frame members (9, 11, 13),
   a plurality of diagonal frame members (15, 17, 19, 21, 23, 25), extending between the inner (27) and the outer (29) support,
   wherein at least one (15, 17, 19, 21, 23, 25) of the diagonal frame members (15, 17, 19, 21, 23, 25) at one end is connected to the inner support (27) and at an opposite end is connected to the outer support (29), wherein said at least one diagonal frame member (15, 17, 19, 21, 23, 25) is pre-tensioned between the inner (27) and the outer (29) support by being subject to an internal force in the frame.

2. Wind turbine rotor blade (5) according to claim 1, wherein said frame comprises a pre-tensioning device (39), such as a pre-tensioning rod arrangement (41), arranged to pre-tension said at least one diagonal member (15, 17, 19, 21, 23, 25) to a predetermined pre-tension force.

3. Wind turbine rotor blade according to any one of the preceding claims, wherein a portion of said at least one diagonal frame member has a tapering cross section, as seen in a direction from said end at which the diagonal frame member is connected to the inner support to said end at which the diagonal frame member is connected to the outer support.

4. Wind turbine rotor blade according to any one of the preceding claims, wherein said diagonal frame member is pre-tensioned to such extent that the elongation of the diagonal frame exceeds 2.5 ‰.

5. Wind turbine rotor blade according to any one of the preceding claims, wherein said at least one diagonal frame member is a rod.

6. Wind turbine rotor blade according to any one of the preceding claims, wherein at least one (9, 11, 13) of said longitudinal frame members (9, 11, 13) has an airfoil-shaped cross-section.

7. Wind turbine rotor blade according to any one of the preceding claims, wherein said at least one (15, 17, 19, 21, 23, 25) diagonal frame member has an airfoil-shaped cross-section.

8. Wind turbine rotor blade according to any one of the preceding claims, wherein the rotor blade (5) comprises a plurality of rotor blade sections (5a-5e), as seen in the longitudinal direction, each section extending from an inner support to an outer support and having at least one pre-tensioned diagonal member between the inner support and the outer support.

9. Wind turbine rotor blade according to any one of the preceding claims, wherein said frame comprises at least two (15, 17, 19, 21, 23, 25) pre-tensioned diagonal frame members.

10. Wind turbine rotor blade according to any one of the preceding claims, wherein said frame comprises at least six (15, 17, 19, 21, 23, 25) diagonal frame members.

Fig. 1

EP 3 222 846 A1

Fig. 2

Fig. 3a

Fig. 3b

Fig. 3c

Fig. 4a

Fig. 4b

Fig. 4c

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 040515 A1 (GRIMM FRIEDRICH [DE]) 10 March 2011 (2011-03-10) * paragraphs [0011] - [0014]; figures 6,7 * ----- | 1-6,8-10 | INV. F03D1/06 |
| X | WO 2012/010785 A1 (ALIZEO [FR]; LAVAUR RICHARD [BE]) 26 January 2012 (2012-01-26) * figures 3-5 * ----- | 1-6,8-10 | |
| X,D | US 1 820 529 A (MARIE DARRIEUS GEORGES JEAN) 25 August 1931 (1931-08-25) * figures 3,4 * ----- | 1-6,8-10 | |
| X,D | US 7 517 198 B2 (BAKER MYLES L [US] ET AL) 14 April 2009 (2009-04-14) * figures 3-5 * ----- | 1-6,8-10 | |
| A | US 2010/260612 A1 (VASUDEVA KAILASH [CA] ET AL) 14 October 2010 (2010-10-14) * paragraph [0043]; figure 9 * ----- | 1 | |

TECHNICAL FIELDS SEARCHED (IPC)

F03D

The present search report has been drawn up for all claims

| Place of search | Date of completion of the search | Examiner |
|---|---|---|
| The Hague | 13 September 2016 | Bradley, David |

EPO FORM 1503 03.82 (P04C01)

EP 3 222 846 A1

## ANNEX TO THE EUROPEAN SEARCH REPORT
## ON EUROPEAN PATENT APPLICATION NO.

EP 16 16 2225

13-09-2016

| Patent document cited in search report | Publication date | Patent family member(s) | Publication date |
|---|---|---|---|
| DE 102009040515 A1 | 10-03-2011 | NONE | |
| WO 2012010785 A1 | 26-01-2012 | FR 2963066 A1 | 27-01-2012 |
| | | WO 2012010785 A1 | 26-01-2012 |
| US 1820529 A | 25-08-1931 | DE 577917 C | 07-06-1933 |
| | | FR 636615 A | 13-04-1928 |
| | | GB 292953 A | 27-12-1928 |
| | | NL 24839 C | 13-09-2016 |
| | | US 1820529 A | 25-08-1931 |
| US 7517198 B2 | 14-04-2009 | AU 2007349286 A1 | 25-09-2008 |
| | | BR PI0721453 A2 | 25-03-2014 |
| | | CA 2681469 A1 | 25-09-2008 |
| | | CN 101715514 A | 26-05-2010 |
| | | DK 2134963 T3 | 27-07-2015 |
| | | EP 2134963 A1 | 23-12-2009 |
| | | JP 5323050 B2 | 23-10-2013 |
| | | JP 2010522307 A | 01-07-2010 |
| | | KR 20100015691 A | 12-02-2010 |
| | | US 2007217918 A1 | 20-09-2007 |
| | | US 2009191063 A1 | 30-07-2009 |
| | | US 2009196757 A1 | 06-08-2009 |
| | | US 2009196758 A1 | 06-08-2009 |
| | | US 2013108453 A1 | 02-05-2013 |
| | | WO 2008115265 A1 | 25-09-2008 |
| US 2010260612 A1 | 14-10-2010 | CA 2758209 A1 | 21-10-2010 |
| | | CN 102483032 A | 30-05-2012 |
| | | EP 2419624 A1 | 22-02-2012 |
| | | EP 3070326 A1 | 21-09-2016 |
| | | ES 2575996 T3 | 04-07-2016 |
| | | US 2010260612 A1 | 14-10-2010 |
| | | WO 2010118517 A1 | 21-10-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7517198 B
- EP 1887219 A

- US 1820529 A